**Europäisches Patentamt**

**European Patent Office**

**Office européen des brevets**

(11) Veröffentlichungsnummer: **0 418 520 A1**

# (12) EUROPÄISCHE PATENTANMELDUNG

(21) Anmeldenummer: 90114646.4

(22) Anmeldetag: 31.07.90

(51) Int. Cl.⁵: **C04B 37/00**

(30) Priorität: 16.09.89 DE 3931008

(43) Veröffentlichungstag der Anmeldung:
27.03.91 Patentblatt 91/13

(84) Benannte Vertragsstaaten:
**AT BE CH DE ES FR GB GR IT LI LU NL SE**

(71) Anmelder: **DIDIER-WERKE AG**
**Lessingstrasse 16-18**
**W-6200 Wiesbaden(DE)**

(72) Erfinder: **Sommerer, Jürgen**
**Langegärten 7**
**W-6229 Rauenthal(DE)**

Erfinder: **Heil, Klaus**
**Schillerstrasse 4**
**W-6200 Wiesbaden(DE)**
Erfinder: **Wiesel, Martin**
**Bierstadter Strasse 28**
**W-6200 Wiesbaden(DE)**
Erfinder: **Kainer, Hartmut, Dr.**
**Am Güldenplan 2G**
**W-6200 Wiesbaden 12(DE)**

(74) Vertreter: **Brückner, Raimund, Dipl.-Ing.**
**c/o Didier-Werke AG Lessingstrasse 16-18**
**W-6200 Wiesbaden(DE)**

(54) **Verbindung eines Bauteils mit einem keramischen Rohr, insbesondere bei einem Wärmetauscher.**

(57) Bei einem Wärmetauscher ist eine Verbindung zwischen einer Grundplatte (2) und einem keramischen Rohr (1), das ein Medium hoher Betriebstemperatur führt, vorgesehen. Um unterschiedliche Wärmedehnungen zwischen dem Rohr (1) und der Grundplatte (2) aufzunehmen und bei Betriebstemperatur Dichtigkeit zu gewährleisten, umschließt in der Grundplatte (2) ein mit einer Glasfüllung (7, 13) versehener Ringraum (5) den Außenumfang des Rohres (1). Die Glasfüllung (7, 13) ist durch die Betriebstemperatur in fließfähigen Zustand geschmolzen.

Fig. 1

Xerox Copy Centre

## VERBINDUNG EINES BAUTEILS MIT EINEM KERAMISCHEN ROHR, INSBESONDERE BEI EINEM WÄRME-TAUSCHER

Die Erfindung betrifft eine Verbindung eines Bauteils mit einem Ende eines keramischen Rohres, das ein Medium hoher Betriebstemperatur führt, insbesondere bei einem Wärmetauscher, beispielsweise einem keramischen Rekuperator, wobei in dem Bauteil ein mit einer Glasfüllung versehener Ringraum den Außenumfang des Rohrendes umschließt.

Eine derartige Verbindung ist in der DE 33 19 468 C2 beschrieben. Dort sind zwei keramische Rohre unterschiedlicher Wärmeausdehnungskoeffizienten verbunden. Das Material der Glasfüllung ist so ausgewählt, daß die Schmelztemperatur des Glases größer ist als die Betriebstemperatur. Bei der Betriebstemperatur ist die Glasfüllung also starr. Bei der Herstellung entsteht in der Glasfüllung ein Umfangsriß. Dessen Breite soll dem Unterschied der Wärmeausdehnungskoeffizienten der Rohre entsprechen. Beim Aufheizen auf die Betriebstemperatur soll sich der Umfangsriß durch die unterschiedlichen Wärmeausdehnungskoeffizienten wieder weitgehend schließen. Die unterschiedliche Wärmedehnung wird nicht durch Flexibilität der Glasfüllung ausgeglichen. Darüberhinaus ergibt sich bei der Betriebstemperatur ein Leckstrom.

Als Verbindung wurden auch Packungen aus keramischen Fasermaterial vorgeschlagen. Das Dichtvermögen solcher Packungen ist allerdings unzureichend.

Aufgabe der Erfindung ist es, eine Verbindung der eingangs genannten Art vorzuschlagen, die unterschiedliche Wärmedehnungen zwischen dem Rohr und dem Bauteil aufnimmt und die bei der Betriebstemperatur für das Medium dicht ist.

Erfindungsgemäß ist obige Aufgabe bei einer Verbindung der eingangs genannten Art dadurch gelöst, daß die Glasfüllung durch die Betriebstemperatur in fließfähigen Zustand geschmolzen ist.

Das Glas ist dabei so ausgewählt, daß seine Schmelztemperatur bei der Betriebstemperatur des jeweiligen Einsatzfalles liegt. Beispielsweise liegt die Betriebstemperatur bei 1300°C. Sie kann jedoch in anderen Anwendungsfällen auch einen Wert zwischen 500°C und 1400°C haben. Bei einer Betriebstemperatur von 1300°C wird ein Borosilikatglas verwendet, wie es beispielsweise unter dem Handelsnamen DURAN der Firma Schott, Mainz, marktbekannt ist. Bei anderen Betriebstemperaturen werden entsprechend andere Gläser verwendet.

Durch die Betriebstemperatur selbst wird die Glasfüllung in fließfähigen Zustand gebracht. Sie füllt dann den Ringraum riß- und lückenlos aus, so daß unabhängig von den unterschiedlichen Wärmedehnungen des Rohres und des Bauteils eine dichte Verbindung gewährleistet ist. Dadurch, daß bei der Betriebstemperatur die dichtende Glasfüllung in fließfähigem Zustand vorliegt, sind Wärmedehnungen ohne weiteres aufgenommen.

Bei Temperaturen unterhalb der Betriebstemperatur ist die Glasfüllung erstarrt. Es werden dabei Lecks entstehen.

Diese können jedoch in Kauf genommen werden, da es nur auf eine Dichtigkeit bei Betriebstemperatur ankommt.

Die Verbindung hat auch den Vorteil, daß sie keine teuren Werkstoffe erfordert und baulich einfach gestaltbar ist, ohne daß eine besondere Werkstoffauswahl des keramischen Rohrs einerseits und des Bauteils andererseits notwendig ist.

In bevorzugter Ausgestaltung der Erfindung beträgt die Viskosität der Glasfüllung bei Betriebstemperatur etwa $10^4$ und $10^5$ dPas.

Ausführungsbeispiele der Erfindung ergeben sich aus der folgenden Beschreibung. In der Zeichnung zeigen:

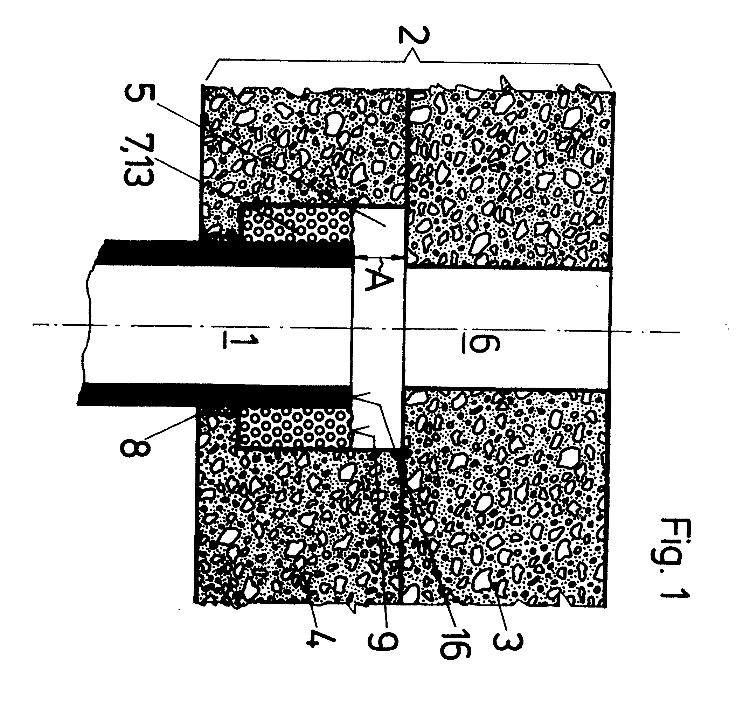

Figur 1 die Verbindung eines keramischen Rohres eines Wärmetauschers mit einer Grundplatte,

Figur 2 ein anderes Ausführungsbeispiel der Erfindung, und

Figur 3 eine Ansicht längs der Linie III-III nach Figur 2.

Ein keramisches Rohr 1 ist in eine Grundplatte 2 eingeschoben. Diese besteht aus einem oberen Teil 3 und einem unteren Teil 4. In dem unteren Teil 4 umschließt ein Ringraum 5 das obere Ende des Rohres 1. Der Außendurchmesser des Ringraums 5 ist größer als der Durchmesser einer Öffnung 6 des oberen Teils 3. Die Öffnung 6 entspricht dem Innendurchmesser des Rohres 1 und setzt dieses fort.

In den Ringraum 5 ist eine Hülse 7 aus Glas eingesetzt. Diese weist im kalten Zustand - bei der Montage - ein Spiel gegenüber dem Rohr 1 auf, so daß sich diese leicht einschieben läßt.

Unterhalb des Ringraums 5 ist zwischen dem Rohr 3 und der Grundplatte 2 ein Ringstopfen 8, beispielsweise aus keramischem Fasermaterial, vorgesehen. Dieser verhindert, daß das Glasmaterial der Hülse 7 in fließfähigem Zustand nach unten ausfließt. Die Oberseite 9 der Hülse 7 liegt zum Innenraum des Rohres 1 offen.

Im Betrieb ist das Rohr 1 von einem Wärmeträgermedium durchströmt, das beispielsweise eine Betriebstemperatur von 1300°C aufweist. Das Glas der Hülse 7 ist so ausgewählt, daß es bei dieser Temperatur fließfähig geschmolzen ist. Es weist dabei eine Viskosität von etwa $10^4$ bis $10^5$ dPas auf und bildet somit eine Glasfüllung 13, die das obere Ende des Rohres 1 dicht umschließt und dicht in der Grundplatte 2 ansteht. Dadurch ist der Bereich oberhalb der Grundplatte 2 gegen den Bereich unterhalb der Grundplatte 2 abgedichtet. Die viskose Glasfüllung 13 paßt sich den unterschiedlichsten, verschiedenen Wärmedehnungen zwischen dem Rohr 1 und der Grundplatte 2 an.

Es ist nicht notwendig, daß die Glasfüllung 13 aus einer formstabilen Hülse entsteht. Stattdessen können bei Umgebungstemperatur auch ein Glaspulver bzw. Glasperlen aus entsprechendem Glas in den Ringraum 5 eingefüllt werden.

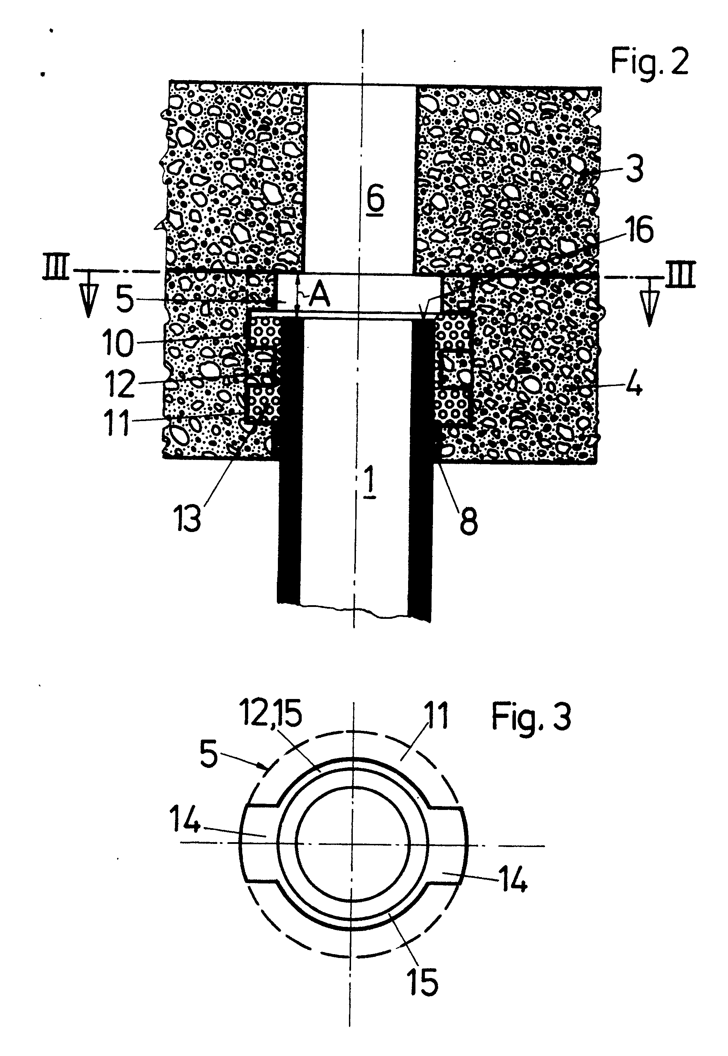

Beim Ausführungsbeispiel nach den Figuren 2 und 3 weist der Ringraum 5 einen oberen, weiteren Abschnitt 10, einen unteren, weiteren Abschnitt 11 und einen mittleren, engeren Abschnitt 12 auf. Die Gläsfullung 13 nimmt eine dementsprechende Gestalt an. Die Fläche, mit der die Glasfüllung 13 an der Wandung des unteren Teils 4 im Ringraum 5 anliegt, ist dadurch vergrößert. Dies verbessert die Dichtwirkung.

Nach Figur 3 ist der obere, weitere Abschnitt 10 nur in zwei gegenüberliegenden Teilzonen 14 ebenso weit wie der untere, weitere Abschnitt 11. In diesen Teilzonen 14 ist der Durchmesser ebenso groß wie der Durchmesser des unteren, weiteren Abschnitts 11. In dazwischenliegenden Teilzonen 15 des oberen, weiteren Abschnitts 10 ist der Durchmesser nur so groß wie der Durchmesser des mittleren, engeren Abschnitts 12.

Bei beiden Ausführungsbeispielen werden in der Grundplatte 2 auch axiale Wärmedehnungen des Rohres 1 aufgenommen. Oberhalb der Stirnkante 16 des Rohres 1 besteht hierfür in dem unteren Teil 4 der Grundplatte 2 ein freier Abstand A.

## Ansprüche

1. Verbindung eines Bauteils mit einem Ende eines keramischen Rohres, das ein Medium hoher Betriebstemperatur führt, insbesondere bei einem Wärmetauscher, beispielsweise einem keramischen Rekuperator, wobei in dem Bauteil ein mit einer Glasfüllung versehener Ringraum den Außenumfang des Rohrendes umschließt,
dadurch gekennzeichnet,
daß die Glasfüllung (7, 13) durch die Betriebstemperatur in fließfähigen Zustand geschmolzen ist.
2. Verbindung nach Anspruch 1,
dadurch gekennzeichnet,
daß die Viskosität der Glasfüllung bei Betriebstemperatur zwischen $10^4$ und $10^5$ dPas liegt.
3. Verbindung nach Anspruch 1 oder 2,
dadurch gekennzeichnet,

daß ein Ringstopfen (8) unterhalb des Ringraums (5) zwischen das Rohr (1) und das Bauteil (2) eingesetzt ist, der ein Abfließen der Glasfüllung (7, 13) aus dem Ringraum (5) verhindert.
4. Verbindung nach einem der vorhergehenden Ansprüche,
dadurch gekennzeichnet,
daß die Oberseite (9) der Glasfüllung (7, 13) zum Innenraum des Rohres (1) offen liegt.
5. Verbindung nach einem der vorhergehenden Ansprüche,
dadurch gekennzeichnet,
daß für die Bildung der Glasfüllung (13) eine bei Raumtemperatur formstabile Hülse (7) in den Ringraum (5) eingesetzt ist.
6. Verbindung nach einem der vorhergehenden Ansprüche 1 bis 4,
dadurch gekennzeichnet,
daß zur Bildung der Glasfüllung (13) bei Raumtemperatur Glasperlen in den Ringraum (5) eingesetzt sind.
7. Verbindung nach einem der vorhergehenden Ansprüche,
dadurch gekennzeichnet,
daß der Ringraum (5) einen oberen, weiteren Abschnitt (10), einen mittleren, engeren Abschnitt (12) und einen unteren, weiteren Abschnitt (11) aufweist.
8. Verbindung nach Anspruch 7,
dadurch gekennzeichnet,
daß der obere, weitere Abschnitt (10) in Teilzonen (10) etwa ebenso weit ist wie der untere, weitere Abschnitt (11) und in dazwischenliegenden Teilzonen (15) etwa ebenso weit ist wie der mittlere, engere Abschnitt (12).

Fig. 1

2

3

16

9

4

6

A

1

5   7,13

8

Fig. 2

Fig. 3

# EUROPÄISCHER RECHERCHENBERICHT

EP 90114646.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁴) |
|---|---|---|---|
| X | <u>DE - A1 - 3 534 091</u> (PHILIPS PATENTVERWALTUNG GMBH) * Gesamt * -- | 1 | C 04 B 37/00 |
| D,X | <u>DE - C2 - 3 319 468</u> (DORNIER SYSTEM GMBH) * Ansprüche * ---- | 1 | |

RECHERCHIERTE SACHGEBIETE (Int Cl.⁴)

C 04 B
F 28 D

Der vorliegende Recherchenbericht wurde für alle Patentansprüche erstellt.

| Recherchenort | Abschlußdatum der Recherche | Prüfer |
|---|---|---|
| WIEN | 30-11-1990 | BECK |

KATEGORIE DER GENANNTEN DOKUMENTEN
X : von besonderer Bedeutung allein betrachtet
Y : von besonderer Bedeutung in Verbindung mit einer anderen Veroffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82